# EUROPÄISCHE PATENTSCHRIFT

(11) **EP 2 144 455 B1**
(45) Veröffentlichungstag und Bekanntmachung des Hinweises auf die Patenterteilung: **10.02.2016**
(21) Anmeldenummer: 09008838.6
(22) Anmeldetag: 07.07.2009
(51) Int. Cl.: H04R 5/033, H04R 25/00, G02C 11/06

(54) **Head-Set zur Knochenleitungs-Schallübertragung**
Head set for bone conduction of the sound
Casque d'écoute destiné à la conduction osseuse du son

(30) Priorität: 07.07.2008 DE 102008031965; 21.03.2009 DE 102009014327
(43) Veröffentlichungstag der Anmeldung: 13.01.2010
(73) Patentinhaber: Bruckhoff Apparatebau GmbH, 30159 Hannover (DE)
(72) Erfinder: Bruckhoff, Henning, 30826 Garbsen (DE)
(74) Vertreter: Bremer, Ulrich

(56) Entgegenhaltungen:
- EP-A1- 1 967 893
- WO-A1-2007/099707
- DE-U1-202005 009 021
- JP-A- 2004 221 949
- US-A1- 2002 012 441

## Beschreibung

Die Erfindung betrifft ein Head-Set zur Knochenleitungs- Schallübertragung.

Ein derartiges Head-Set ist hierbei eine beliebige Befestigungseinrichtung zur Befestigung am Kopf eines Benutzers, die eine Knochenleitungs-Schallausgabefunktion bzw. eine Knochenleitungs- Höreinrichtung zur Schalleinleitung trägt.

Bei Knochenleitungshörgeräten erfolgt eine Schalleinleitung von außen über einen Vibrationskonduktor auf einen Knochen des Schädels, im Allgemeinen den Mastoiden. Hierzu wird der Konduktor mit einer geeigneten Anpresskraft von im Allgemeinen größer/gleich 100g an den Knochen gedrückt.

Bei Knochenleitungshörgerät-Brillen ist das Knochenleitungshörgerät im Allgemeinen in einem Brillenbügel untergebracht. Somit ist ein Bügel als Funktionsbügel ausgebildet, in dem oder an dem der Vibrationskonduktor, ein Verstärker, Bedieneinrichtungen bzw. Stellelemente zur individuellen Einstellung durch den Benutzer, und ein Mikrofon sowie eine Batterie untergebracht sind. Das Knochenleitungshörgerät wird somit als geschlossenes Modul ausgebildet. Hierbei sind auch Übertragungen zwischen der linken und rechten Seite, d.h. eine Ausbildung der Knochenleitungshörgerät-Brille mit zwei Funktionsbügeln und eine Signalübertragung zwischen den beiden Seiten als CROS oder BiCROS möglich.

Die von dem Benutzer wahrgenommene akustische Qualität der Knochenleitungshörgerät-Brillen ist jedoch zum Teil begrenzt. Hierbei treten insbesondere auch Qualitätsbeeinträchtigungen auf, die nicht direkt messtechnisch erklärbar sind.

Die DE 20 2005 009021 U1 zeigt ein Knochenhörgerät mit einem Mikrofon, einer elektronischen Signalbearbeitungs- und Verstärkungseinheit und mit einem elektronischen Wandler, wobei das Mikrofon und die Signalbearbeitungs- und Verstärkungseinheit lösbar an einen Tragbügelbogien und der hiermit verbundene elektrische Wandler ebenfalls lösbar an ein Tragbügelende eines Tragbügels angeschlossen sind.

Die WO 2007/099707 A1 zeigt eine Kommunikationseinrichtung vom Brillentyp, bei der Knochenleitungs-Höreinrichtungen an den Innenseiten der Brillenbügel vorgesehen sind, weiterhin in den Brillenbügelverstärker und einer Batterie vorgesehen sind, wobei ein Mikrofon in einem mittleren, die beiden schwenkbaren Brillenbügel verbindenden Gestell vorgesehen ist.

Die JP2004221949A beschreibt ein Implantat mit Knochenleitungs-Hörhilfe zur Anbringung an einem Oberkiefer, der Signale von einem getrennten Sender empfängt, der über ein Mikrofon Schallsignale aufnimmt.

Der Erfindung liegt die Aufgabe zugrunde, eine hohe akustische Qualität mit relativ geringem Aufwand zu erreichen.

Diese Aufgabe wird durch ein Head-Set nach Anspruch 1 gelöst. Die Unteransprüche beschreiben bevorzugte Weiterbildungen.

Das erfindungsgemäße Head-Set kann gemäß einer Ausbildung z. B. ein Brillengestell umfassen, d.h. als Knochenleitungshörbrillen- Anordnung ausgebildet sein, ein magnetisch angekoppeltes Hörgerät und/oder einen über den Kopf gelegten Bügel umfassen; weiterhin kann es auch z. B. mit einer Ohrschlaufe am Ohr des Benutzers aufgenommen sein.

Erfindungsgemäß wird eine Entkopplung der Mikrofoneinrichtung von zumindest dem Knochenleitungs-Hörgerät erreicht, vorzugsweise auch von der Befestigungseinrichtung, die das Knochenleitungs-Hörgerät trägt und am Kopf positioniert.

Bei der Ausbildung als Hörbrille ist somit die Schallausgabeeinrichtung bzw. das Hörgerät nicht mehr an oder als Teil der Hörbrille, d.h. nicht an dem Optikgestell oder einem der Bügel vorgesehen, sondern außerhalb des Optikgestells und der Bügel angeordnet.

Die Mikrofoneinrichtung kann z. B. am Hemd des Benutzers, z.B. einer Hemdtasche oder am Revers, oder auch am Gürtel des Benutzers angebracht werden und ist mit den weiteren Funktionselementen des Knochenleitungsmoduls bzw. Knochenleitungshörgerätes drahtlos über einen Sender und einen Empfänger verbunden.

Der Erfindung liegt die Erkenntnis zugrunde, dass z. B. bei herkömmlichen Knochenleitungshörgerät-Brillen eine erhebliche qualitative Beeinträchtigung durch Körperschallwellen auftritt, die von dem Vibrationskonduktor ausgehen und durch mechanische Rückkopplung von dem Vibrationskonduktor über den Konduktorträger auf den Funktionsbügel übertragen werden und somit auch in das in dem Funktionsbügel aufgenommene Mikrofon eingeleitet werden. Hierbei können auch elastische Aufhängungen des Vibrationskonduktors diese Körperschallwellen nicht beseitigen, da aufgrund der erforderlichen Anpresskraft bzw. Anlagekraft des Vibrationskonduktors am Kopf des Benutzers eine gewisse mechanische Steifigkeit der Anbindung des Konduktorträgers erforderlich ist.

Indem erfindungsgemäß die Mikrofoneinrichtung von dem Knochenleitungs-Hörgerät, insbesondere von dessen Vibrationskonduktor getrennt angebracht ist, kann eine überraschend deutliche Qualitätsverbesserung erreicht werden. Bei einer Knochenleitungs- Hörbrillenanordnung ist die Mikrofoneinrichtung somit nicht an dem Hörbrillengestell, d.h. weder am Optikgestell noch an den Bügeln, angebracht.

Erfindungsgemäß wird weiterhin erkannt, dass diese externe Anbringung insbesondere bei einer Mikrofoneinrichtung mit mindestens zwei in einem gemeinsamen Gehäuse aufgenommenen einzelnen Mikrofonen vorteilhaft ist, die eine Laufzeitmessung des Schallsignals ermöglichen, so dass das eine Mikrofon, das eingehende Schallsignale vor dem anderen Mikrofon aufnimmt, stärker verstärkt wird, wodurch dem Benutzer ein Richtungshören ermöglicht wird. Hierbei können auch mehr als zwei einzelne Mikrofone aufgenommen sein.

Erfindungsgemäß kann weiterhin auch eine Stereo-Mikrofoneinrichtung mit zwei räumlich getrennten Mikrofonen vorgesehen sein, wobei dann beide Mikrofone separat mit jeweils einem Funktionsgehäuse verbunden sind. Bei Ausbildung als Hörbrille sind somit beide Mikrofone mit einem Funktionsbügel verbunden; somit sind dann beide Bügel als Funktionsbügel ausgebildet.

Die Erfindung wird im Folgenden anhand der beiliegenden Zeichnungen an einigen Ausführungsformen erläutert. Es zeigen:
- Fig. 1: ein illustratives Beispiel einer Knochenleitungshörbrillen-Anordnung mit einer über eine Drahtleitung angeschlossenem Mikrofoneinrichtung;
- Fig. 2: eine Ausführungsform mit drahtloser Signalübertragung.
- Fig. 3: eine Darstellung verschiedener Ausführungsformen des erfindungsgemäßen Head-Sets.

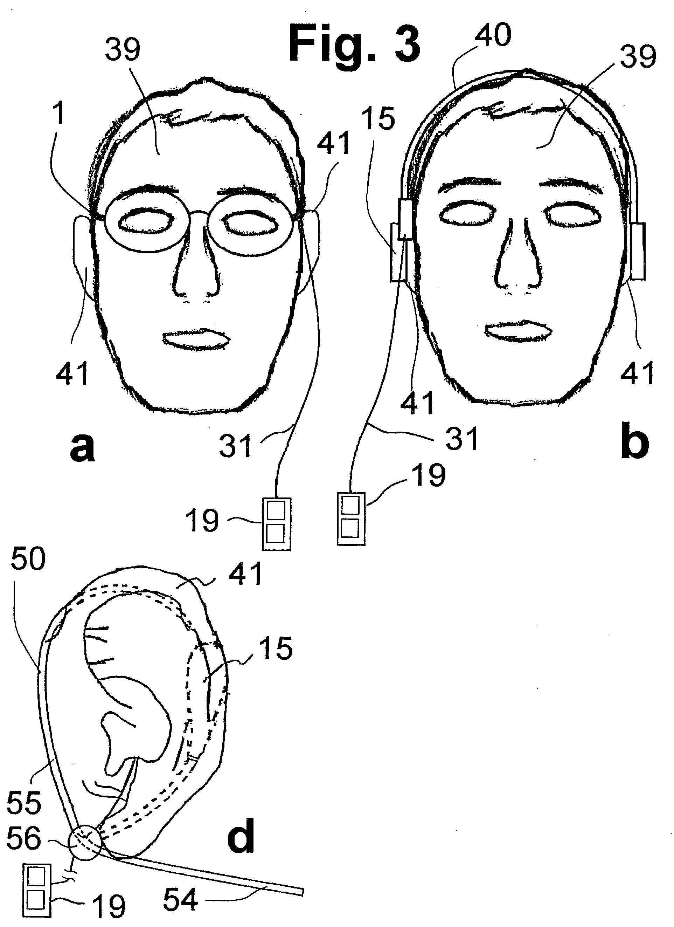

Fig. 3 zeigt beispielhafte Ausbildungen des Head-Sets als a) HörbrillenAnordnung, b) Kopfbügel-Anordnung, und d) als Ohrschlaufen-System.

Eine Knochenleitungshörgerät-Brille 1 weist gemäß einem illustrativen Beispiel ein Optikgestell 2 aus z.B. Metall oder Kunststoff mit zwei Glasfassungen 2a, 2b, einem die Glasfassungen 2a, 2b verbindenden Nasenbügel 2c und einem rechten Bügel 4 mit rechtem Ohrhaken 5 sowie einem linken Bügelansatz 6 auf. Der Bügel 4 und der Bügelansatz 6 sind vorzugsweise gegenüber dem Optikgestell 2 verstellbar, insbesondere nach innen klappbar, z.B. aufgrund ihrer Flexibilität oder über zusätzliche Scharniere 3a, 3b.

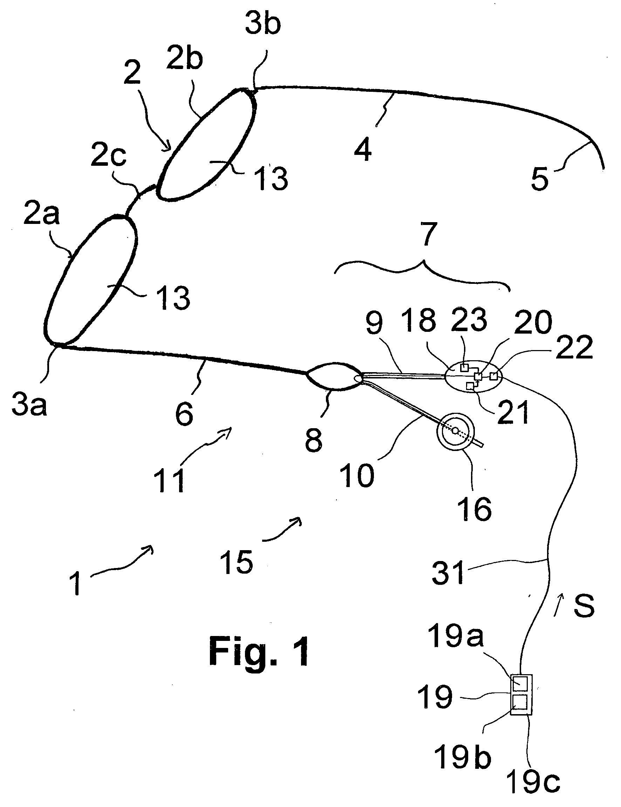

Der linke Bügelansatz 6 ist gegenüber dem rechten Bügel 4verkürzt, wobei an ihm ein Knochenleitungsmodul 7 befestigt ist, das eine Befestigungseinrichtung, z. B. eine Befestigungskammer 8, und weiterhin einen Bügelast 9 und einen Konduktorträger 10 aufweist. Der linke Bügelansatz 6 und das Knochenleitungsmodul 7 bilden zusammen den Funktionsbügel 11. Die relative Anordnung des Bügelastes 9 und des Konduktorträgers 10 zueinander ist grundsätzlich frei wählbar. Gemäß Figur 1 ist der Bügelast 9 oberhalb des Konduktorträgers 10 angeordnet, es ist auch eine entsprechend reverse Anordnung möglich.

Die Äste 9 und 10 sind vorzugsweise beide kaltverformbar und somit in eine geeigneten Position einstellbar. Sie dienen somit zunächst der Fixierung des Optikgestells 2 entsprechend der Funktion des rechten Ohrhakens 5.

Auf dem Konduktorträger 10 ist ein Vibrationskonduktor 16 angeordnet, wobei er insbesondere längsverschiebbar aufgenommen sein kann. Eine geeignete Anpresskraft des Vibrationskonduktors 16 ist durch Biegen des kaltverformbaren Konduktorträgers 10 einstellbar.

Der Bügelast 9 und der Konduktorträger 10 können direkt von der Befestigungskammer 8 ausgehen oder sich auch nachfolgend verzweigen. Sie können insbesondere als Metallrohre ausgebildet sein, die an der vorzugsweise mit einem Metallgehäuse ausgebildeten Befestigungskammer 8 angebracht sind. Der Vibrationskonduktor 16 wird gegen einen Kopfknochen des Benutzers, im Allgemeinen den Mastoid, gedrückt und ermöglicht mit einem Anlagedruck von z.B. 100g eine direkte Schallübertragung ins Innenohr. In dem Konduktorträger 10 verlaufen z.B. zwei oder mehr elektrische Leitungen für die Signalübertragung zu dem Vibrationskonduktor 16.

Am Ende des Bügelastes 9 ist ein Funktionsgehäuse 18 angebracht, in dem mehrere elektrische Komponenten untergebracht sind. Diese elektrischen Komponenten können insbesondere ein Verstärker 20, eine Batterie 23 zur Stromversorgung, ein Taster 21 oder andere manuell bedienbare Stelleinrichtungen sowie z.B. auch eine Schnittstelle, z. B. Anschlussbuchse für eine Programmierung über eine externe Steuereinrichtung sein. Diese elektrischen Komponenten können in dem Funktionsgehäuse 18 und/oder in der Befestigungskammer 8 angeordnet sein. Hier ist eine hohe Variabilität in der genauen Positionierung möglich. Hierbei verläuft eine geeignete Anzahl, z.B. zwei oder mehr elektrische Leitungen von dem Funktionsgehäuse 18 durch den Bügelast 9 zu der Befestigungskammer 8 und von dort durch den Konduktorträger 10 zu dem Vibrationskonduktor 16. Somit kann der zur Verfügung stehende Raum entsprechend ausgenutzt werden.

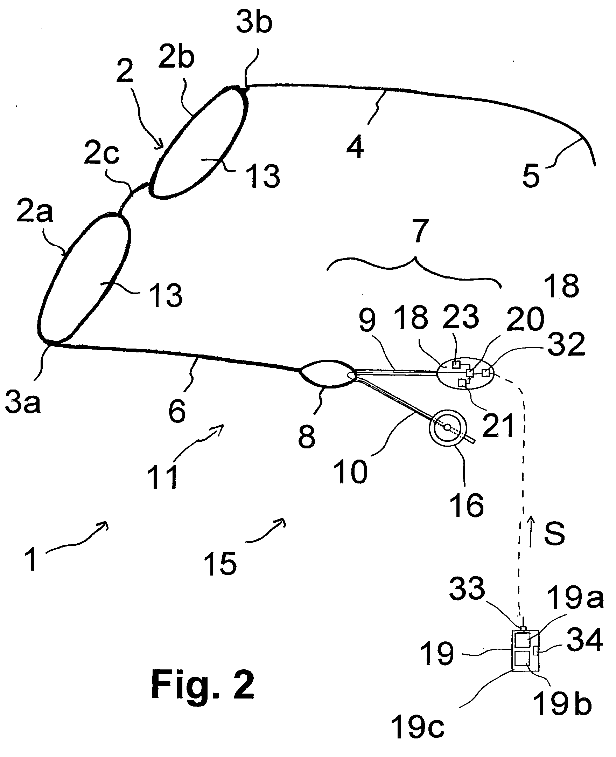

Die Mikrofoneinrichtung 19 ist außerhalb der Knochenleitungshörgerät-Brille 30, d.h. des Optikgestells 2 und der Bügel 4, 11 angeordnet. Somit bilden die Knochenleitungshörgerät-Brille 1 und das Mikrofon 19 die gesamte Knochenleitungshörbrillen- Anordnung 30. Das Mikrofon 19 ist mit dem Funktionsgehäuse 18 signalmäßig verbunden. Gemäß Fig. 1 ist hierzu eine Leitung 31 zwischen der Mikrofoneinrichtung 19 und dem Funktionsgehäuse 18 vorgesehen, über die Signale S übertragen werden. Im oder am Funktionsgehäuse 18 ist eine Schnittstelle 22 vorgesehen, in die die Leitung 31eingesetzt wird. Gemäß der Ausführungsform der Fig. 2 erfolgt eine drahtlose Datenübertragung, d.h. an der Mikrofoneinrichtung 19 ist ein Sender 33 und entsprechend im oder am Funktionsgehäuse 18 ein Empfänger 32 zum Empfang der von dem Sender 33 ausgesandten drahtlosen Signale S vorgesehen.

Bei dem illustrativen Beispiel der Fig. 1 kann die Mikrofoneinrichtung 19 ohne eigene Stromversorgung ausgestattet sein und entsprechend von der Batterie 23 mit versorgt werden. Bei der Ausführungsform der Fig. 2 ist eine eigene Stromversorgung, d.h. Batterie 34 bzw. Akku 34, in der Mikrofoneinrichtung 19 vorgesehen.

Bei sämtlichen Ausführungsformen kann die Mikrofoneinrichtung 19 in einem gemeinsamen Gehäuse 19c mehrere einzelne Mikrofone 19a, 19b aufweisen, die separat voneinander Schallsignale aufnehmen. Nachfolgend kann ein Laufzeitunterschied zwischen den einzelnen Mikrofonen 19a, 19b ermittelt werden, so dass die Richtung der Schallquelle ermittelt werden kann, da das der Schallquelle nähere Mikrofon 19a oder 19b die entsprechenden Schallsignal früher empfängt und als elektrische Signale wieder ausgibt. Nachfolgend können dann die Ausgangssignale der einzelnen Mikrofone 19a, 19b in Abhängigkeit ihrer Position relativ zur Schallquelle versteckt werden, wobei insbesondere die Ausgangssignale des vorderen Mikrofons, z.B. 19b, stärker verstellt werden. Somit wird ein Richtungshören ermöglicht. Hierbei können auch mehr als zwei, z. B. drei, vier oder fünf einzelne Mikrofone vorgesehen sein.

Die Mikrofoneinrichtung 19 kann an verschiedenen Stellen am Benutzer, d.h. insbesondere auch außerhalb des Kopfbereiches angeordnet werden. Sie kann z.B. am Hemd, z.B. einer Hemdtasche oder am Hemdrevers, oder z.B. auch an Gürtel befestigt werden.

Erfindungsgemäß kann weiterhin ein Rauschgenerator eingesetzt werden, d.h. funktionell im Funktionsgehäuse 18 integriert werden, um einem Tinnitus-Patienten ein breitbandiges oder frequenzspezifisches Rauschen aufzugeben.

Weiterhin kann erfindungsgemäß alternativ oder zusätzlich zu der Laufzeitmessung eine Stereo-Anordnung von zwei Mikrofonen vorgesehen sein, die baulich getrennt vorgesehen sind, z.B. links und rechts am Hemd befestigt. Eine derartige Stereo-Anordnung ist insbesondere bei der drahtlosen Verbindung der Fig. 2 sinnvoll. Bei einer derartigen Ausführungsform sind dann beide Bügel als Funktionsbügel 11 ausgebildet, wobei jedes Mikrofon an einen Funktionsbügel überträgt.

In Fig. 1 und 2 kann der Vibrationskonduktor 16 auch in oder an dem Funktionsgehäuse 18 angebracht sein.

Die Figuren 3b bis 3d zeigen weitere Ausführungsformen, bei denen eine Knochenleitungs-Höreinrichtung 15 mittels unterschiedlicher Befestigungseinrichtungen in oder an dem Kopf 39 eines Benutzers befestigt werden. Die Knochenleitungs-Höreinrichtung 15 kann hierbei grundsätzlich entsprechend 2 ausgebildet sein, wobei auch hier der Vibrationskonduktor 16 in oder an dem Funktionsgehäuse 18 angebracht sein kann. Das Mikrofon 19 ist mit der Knochenleitungs- Höreinrichtung 15 drahtlos entsprechend Fig. 2 verbunden.

Bei der Ausführungsform der Fig. 3b ist ein Head-Set vorgesehen, das als Befestigungseinrichtung einen Kopfbügel 40 aufweist, der z. B. halboffen bzw. U-Förmig ist und in Querrichtung über dem Kopf 39 eines Benutzers verspannt wird. Hierbei kann eine Knochenleitungs-Höreinrichtung 15 an einem oder beiden Seiten, d.h. jeweils an den Knochen in der Nähe der Außenohren 41, vorgesehen sein.

Somit wird in Fig. 3b, eine Spannkraft über den ganzen Kopf erzeugt.

Fig. 3d zeigt als Befestigungseinrichtung eine Ohrschlaufe 50 am Außenohr 41, die die Knochenleitungs-Höreinrichtung 15 trägt und durch Längenveränderung ihres freien Endes 54 verstellt werden kann. Hierbei können elektrische Leitungen zunächst durch das Schlaufenkabel 55 geführt sein bis zu einer Schnittstelle 56, an die das Mikrofon 19 drahtlos angebunden ist.

Weiterhin kann auch ein magnetisch angekoppeltes Hörgerät vorgesehen sein.

## Patentansprüche

1. Head-Set zur Knochenleitungs- Schallübertragung, das mindestens aufweist:
eine Befestigungseinrichtung (2, 4, 11) zur Befestigung am Kopf des Benutzers, und
eine Knochenleitungs-Höreinrichtung (15), die als Funktionselement einen Vibrationskonduktor (16) aufweist und von der Befestigungseinrichtung (2, 4, 11) getragen oder aufgenommen ist, und
eine Mikrofoneinrichtung (19), die Signale (S1, S2) zu zumindest einem der Funktionselemente (32) ausgibt,
**dadurch gekennzeichnet, dass**
die Mikrofoneinrichtung (19) außerhalb der Knochenleitungs- Höreinrichtung (15) vorgesehen ist,
die Knochenleitungs-Höreinrichtung (15) als Funktionselemente (16, 18, 20, 21, 22, 23, 32) weiterhin einen Verstärker (20) und mindestens ein Bedienelement (21) aufweist, und
die Mikrofoneinrichtung (19) von der Befestigungseinrichtung (2, 4, 11) getrennt ist und drahtlose Signale (S1) an das mindestens eine Funktionselement (32) ausgibt.

2. Head-Set nach Anspruch 1, **dadurch gekennzeichnet, dass** die Knochenleitungs-Höreinrichtung (15) ein Funktionrgehäuse (18) aufweist, in oder an dem zumindest der Verstärker (20) und/oder das mindestens eine Bedienelement (21) und/oder zumindest eine Schnittstelle zur Signalaufnahme von der Mikrofoneinrichtung (19) aufgenommen sind.

3. Head-Set nach einem der vorherigen Ansprüche, **dadurch gekennzeichnet, dass** die Mikrofoneinrichtung (19) mindestens zwei in einem gemeinsamen Mikrofongehäuse (19c) aufgenommene einzelne Mikrofone (19a, 19b) aufweist und die Ausgangssignale der einzelnen Mikrofone (19a, 19b) in Abhängigkeit eines Laufzeitunterschieds der aufgenommenen Signale verstärkt werden.

4. Head-Set nach einem der vorherigen Ansprüche, **dadurch gekennzeichnet, dass** zwei räumlich getrennte Mikrofoneinrichtungen vorgesehen sind zur Ausbildung eines Stereoeffektes, wobei die beiden Mikrofoneinrichtungen ihre Signale zu zwei unterschiedlichen Knochenleitungs-Höreinrichtungen übertragen, die durch die mindestens eine Befestigungseinrichtung zur Positionierung an den beiden Ohren des Benutzers vorgesehen sind.

5. Head-Set nach einem der vorherigen Ansprüche, **dadurch gekennzeichnet, dass** es als Knochenleitungshörbrillen-Anordnung ausgebildet ist, wobei:
als Befestigungseinrichtung ein Optikgestell (2) zur Aufnahme von Brillengläsern (13) und zwei an dem Optikgestell (2) aufgenommene Bügel (4, 11) vorgesehen sind,
wobei zumindest ein Bügel (11) als Funktionsbügel (11) ausgebildet ist, an dem zumindest der Vibrationskonduktor (16), der Verstärker (20) und das mindestens eine Bedienelement (21) vorgesehen sind.

6. Head-Set nach Anspruch 5, **dadurch gekennzeichnet, dass** in dem Funktionsbügel (11) eine Schnittstelle (22) vorgesehen ist, an die die Leitung (31) angeschlossen ist.

7. Head-Set nach Anspruch 6, **dadurch gekennzeichnet, dass** der Funktionsbügel (11) einen mit dem Optikgestell (2) verbundenen Bügelansatz (6), eine am Bügelansatz (6) angebrachte Befestigungseinrichtung (8), einen von der Befestigungseinrichtung (8) abgehenden Bügelast (9) und einen den Vibrationskonduktor (16) tragenden Konduktorträger (10) aufweist.

8. Head-Set nach Anspruch 6 oder 7, **dadurch gekennzeichnet, dass** das Funktionsgehäuse (18) am Bügelast (9) angebracht ist.

9. Head-Set nach einem der Ansprüche 1 bis 4, **dadurch gekennzeichnet, dass** die Befestigungseinrichtung einen Kopfbügel (40) zum Aufsetzen auf den Kopf (39) eines Benutzers aufweist.

10. Head-Set nach Anspruch 5, **dadurch gekennzeichnet, dass** die Befestigungseinrichtung eine Ohrschlaufe (50) zum Einhängen am Außenohr (41) des Benutzers aufweist.

## Claims

1. Head set for bone conduction sound transmission, having at least:
a fastening device (2, 4, 11) for fastening to the head of the user, and
a bone conduction hearing device (15) which has a vibration conductor (16) as a functional element and is carried or received by the fastening device (2, 4, 11),
and
a microphone device (19) which emits signals (S1, S2) to at least one of the functional elements (32),
**characterised in that**
the microphone device (19) is provided outside the bone conduction hearing device (15),
the bone conduction hearing device (15) further has an amplifier (20) and at least one control element (21) as functional elements (16, 18, 20, 21, 22, 23, 32), and the microphone device (19) is separate from the fastening device (2, 4, 11) and emits wireless signals (S1) to the at least one functional element (32).

2. Head set according to claim 1, **characterised in that** the bone conduction hearing device (15) has a functional housing (18) in or on which there are received at least the amplifier (20) and/or the at least one control element (21) and/or at least one interface for receiving signals from the microphone device (19).

3. Head set according to any one of the preceding claims, **characterised in that** the microphone device (19) has at least two individual microphones (19a, 19b) accommodated in a common microphone housing (19c), and the output signals of the individual microphones (19a, 19b) are amplified in dependence on an interaural time difference of the received signals.

4. Head set according to any one of the preceding claims, **characterised in that** there are provided two spatially separate microphone devices to form a stereo effect, wherein the two microphone devices transmit their signals to two different bone conduction hearing devices which are provided by the at least one fastening device for positioning on the two ears of the user.

5. Head set according to any one of the preceding claims, **characterised in that** it is in the form of a bone conduction hearing spectacles arrangement, wherein:
there are provided as the fastening device an optical frame (2) for receiving spectacle lenses (13), and two arms (4, 11) received on the optical frame (2),
wherein at least one arm (11) is in the form of a functional arm (11) on which there are provided at least the vibration conductor (16), the amplifier (20) and the at least one control element (21).

6. Head set according to claim 5, **characterised in that** there is provided in the functional arm (11) an interface (22) to which the line (31) is connected.

7. Head set according to claim 6, **characterised in that** the functional arm (11) has an arm stem (6) connected to the optical frame (2), a fastening device (8) attached to the arm stem (6), an arm limb (9) branching from the fastening device (8), and a conductor carrier (10) carrying the vibration conductor (16).

8. Head set according to claim 6 or 7, **characterised in that** the functional housing (18) is attached to the arm limb (9).

9. Head set according to any one of claims 1 to 4, **characterised in that** the fastening device has a headband (40) for placing on the head (39) of a user.

10. Head set according to claim 5, **characterised in that** the fastening device has an ear loop (50) for hanging from the outer ear (41) of the user.

## Revendications

1. Casque destiné à la transmission du son par conduction osseuse présentant au moins :
un dispositif de fixation (2, 4, 11) destiné à la fixation sur la tête de l'utilisateur et un dispositif auditif à conduction osseuse (15), qui présente un conducteur de vibrations (16) comme élément fonctionnel et est supporté par ou reçu dans le dispositif de fixation (2, 4, 11), et
un dispositif microphonique (19) qui émet des signaux (S1, S2) vers au moins un des éléments fonctionnels (32),
**caractérisé en ce que**
le dispositif microphonique (19) est prévu à l'extérieur du dispositif auditif à conduction osseuse (15),
le dispositif auditif à conduction osseuse (15) présente, en outre, comme éléments fonctionnels (16, 18, 20, 21, 22, 23, 32), un amplificateur (20) et au moins un élément de commande (21) et **en ce que**
le dispositif microphonique (19) est séparé du dispositif de fixation (2, 4, 11) et émet des signaux sans fil (S1) vers l'au moins un élément fonctionnel (32).

2. Casque suivant la revendication 1, **caractérisé en ce que** le dispositif auditif à conduction osseuse (15) présente un boîtier fonctionnel (18), dans ou sur lequel sont reçus au moins l'amplificateur (20) et/ou l'au moins un élément de commande (21) et/ou au moins une interface pour la réception des signaux émis par le dispositif microphonique (19).

3. Casque suivant une des revendications précédentes, **caractérisé en ce que** le dispositif microphonique (19) présente au moins deux microphones distincts (19a, 19b) reçus dans un boîtier de microphone commun (19c) et **en ce que** les signaux de sortie des microphones distincts (19a, 19b) sont amplifiés en fonction d'une différence de temps de propagation des signaux reçus.

4. Casque suivant une des revendications précédentes, **caractérisé en ce que** sont prévus deux dispositifs microphoniques séparés dans l'espace pour la génération d'un effet stéréo, les deux dispositifs microphoniques transmettant leurs signaux à deux dispositifs auditifs à conduction osseuse différents prévus en raison de l'au moins un dispositif de fixation pour le positionnement sur les deux oreilles de l'utilisateur.

5. Casque suivant une des revendications précédentes, **caractérisé en ce qu'**il est conçu comme ensemble de lunettes auditives à conduction osseuse, une monture optique (2) destinée à recevoir des verres ophtalmiques (13) et deux branches (4, 11) reçues sur la monture optique (2) étant prévues comme dispositif de fixation,
au moins une branche (11) étant conçue comme branche fonctionnelle (11), sur laquelle sont prévus au moins le conducteur de vibrations (16), l'amplificateur (20) et l'au moins un élément de commande (21).

6. Casque suivant la revendication 5, **caractérisé en ce qu**'une interface (22), à laquelle est raccordé le conduit (31), est prévue dans la branche fonctionnelle (11).

7. Casque suivant la revendication 6, **caractérisé en ce que** la branche fonctionnelle (11) présente une base de branche (6) reliée à la monture optique (2), un dispositif de fixation (8) monté sur la base de branche (6), un bras (9) partant du dispositif de fixation (8) et un support de conducteur (10) supportant le conducteur de vibrations (16).

8. Casque suivant la revendication 6 ou 7, **caractérisé en ce que** le boîtier fonctionnel (18) est monté sur le bras (9).

9. Casque suivant une des revendications 1 à 4, **caractérisé en ce que** le dispositif de fixation présente un arceau de tête (40) destiné à être posé sur la tête (39) de l'utilisateur.

10. Casque suivant la revendication 5, **caractérisé en ce que le** dispositif de fixation présente un contour d'oreille (50) destiné à s'accrocher sur l'oreille externe (41) de l'utilisateur.
